# EUROPÄISCHE PATENTANMELDUNG

(11) **EP 1 203 873 A2**
(43) Veröffentlichungstag der Anmeldung: **08.05.2002**
(21) Anmeldenummer: 01123236.0
(22) Anmeldetag: 02.10.2001
(51) Int. Cl.: F02B 75/20, F16F 15/26

(54) **Brennkraftmaschine mit drei oder mehr Zylindern**

(30) Priorität: 02.11.2000 DE 10054317
(71) Anmelder: Volkswagen Aktiengesellschaft, 38436 Wolfsburg (DE)
(72) Erfinder: Goldau, Arne, 38444 Wolfsburg (DE)

(57) **Zusammenfassung**

Die Erfindung betrifft eine Brennkraftmaschine, insbesondere für ein Kraftfahrzeug, mit N ≥ 3 Zylindern, in denen jeweils ein Kolben oszillierend vorgesehen ist, und mit einer Kurbelwelle mit N Kurbelkröpfungen, wobei jeweils eine Kurbelkröpfung mit einem Kolben in kraftübertragender Weise verbunden ist, wobei die Kurbelkröpfungen der Kurbelwelle in einer Ansicht in Richtung der Längsachse der Kurbelwelle an vorbestimmten Winkelpositionen zu einem Kurbelstern angeordnet sind. Hierbei sind die Kurbelkröpfungen in dem Kurbelstern derart angeordnet, daß die zu diesem Kurbelstern gehörende Zündfolge unter allen möglichen Zündfolgenvarianten der Zylinderzahl N die niedrigsten Momentenamplituden 2. Ordnung aufweist.

## Beschreibung

Die Erfindung betrifft eine Brennkraftmaschine mit N ≥ 3 Zylindern, in denen jeweils ein Kolben oszillierend vorgesehen ist, und mit einer Kurbelwelle mit N Kurbelkröpfungen, wobei jeweils eine Kurbelkröpfung mit einem Kolben in kraftübertragender Weise verbunden ist, wobei die Kurbelkröpfungen der Kurbelwelle in einer Ansicht in Richtung der Längsachse der Kurbelwelle an vorbestimmten Winkelpositionen zu einem Kurbelstern angeordnet sind, gemäß dem Oberbegriff des Anspruchs 1.

Bei bekannten 5-Zylinder-Reihenmotoren wird derzeit diejenige Zündreihenfolge gewählt, welche das geringste Anregungspotential bzgl. Massenwirkung des Kurbeltriebes besitzt. Dies ist, wie beispielsweise aus "Kraftfahrttechnisches Taschenbuch", Bosch, 23. Auflage, Braunschweig, Wiesbaden, Vieweg 1999, Seite 395 bekannt, die Zündfolge 1-2-4-5-3. Die trotz der Verwendung der optimierten Zündfolge noch verbleibenden Massenmomente werden durch Ausgleichswellen kompensiert. Um Momente 2. Ordnung zu neutralisieren sind zwei Ausgleichswellen erforderlich, die mit der doppelten Kurbelwellendrehzahl rotieren, wie aus der DE 40 19 304 C1 bekannt. Trotz geringerer Amplitude erzeugen die Anregungen 1. Ordnung Schwingwege, die für Komfortaggregate auszugleichen sind, so daß bisher insgesamt drei Ausgleichswellen vorgesehen werden müssen.

Der vorliegenden Erfindung liegt die Aufgabe zugrunde, eine Brennkraftmaschine der obengenannten Art bzgl. des Schwingungskomforts zu verbessern und bzgl. des Ausgleichs von Massenmomenten bzw. Massenkräften zu vereinfachen.

Diese Aufgabe wird erfindungsgemäß durch eine Brennkraftmaschine der o. g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die Kurbelkröpfungen in dem Kurbelstern derart angeordnet sind, daß die zu diesem Kurbelstern gehörende Zündfolge unter allen möglichen Zündfolgenvarianten der Zylinderzahl N die niedrigsten Momentenamplituden 2. Ordnung aufweist.

Dies hat den Vorteil, daß sich eine mechanisch einfachere und gleichzeitig wirksamere Neutralisierung von Massenmomenten erzielen läßt. So wird beispielsweise bei einer 5-Zylinder-Brennkraftmaschine unter Abkehr von der bisherigen Zündfolge 1-2-4-5-3 eine bisher im Stand der Technik bzgl. der auftretenden Massenmomente als unbrauchbar erachtete Zündfolge 1-4-3-2-5 gewählt. In überraschender Weise hat sich herausgestellt, daß die in der Amplitude höheren Massenmomente durch nur eine einzige Ausgleichswelle neutralisiert werden können.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine grafische Darstellung eines herkömmlichen Kurbelsterns,
- Fig. 2: eine grafische Darstellung eines erfindungsgemäß ausgebildeten Kurbelsterns,
- Fig. 3: eine grafische Darstellung von Massenmomenten einer herkömmlichen Kurbelwelle mit dem Kurbelstern gemäß Fig. 1 und
- Fig. 4: eine grafische Darstellung von Massenmomenten einer erfindungsgemäß ausgebildeten Kurbelwelle mit dem Kurbelstern gemäß Fig. 2.

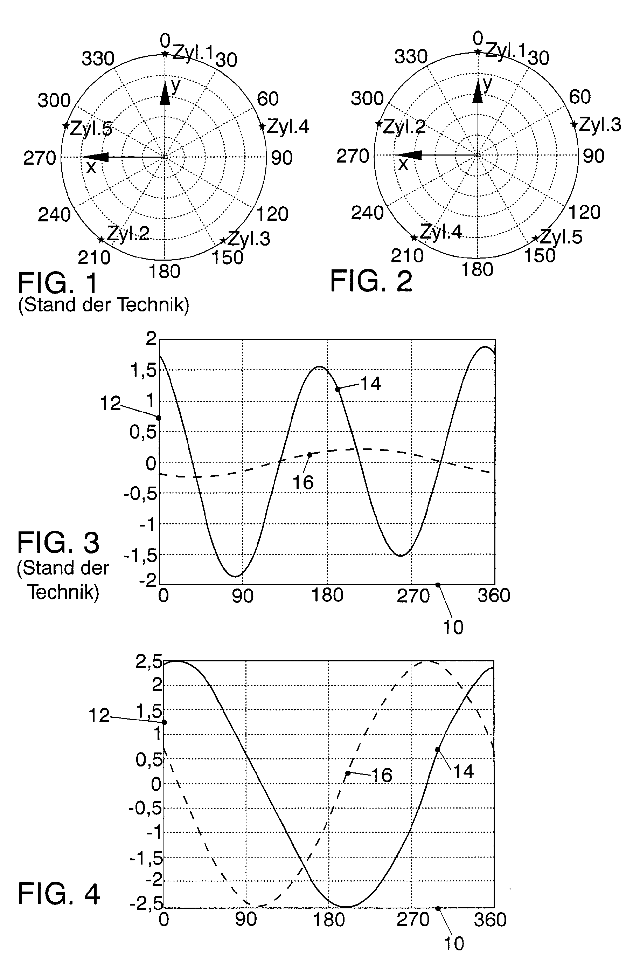

Nachfolgend wird die Erfindung beispielhaft anhand eines 5-Zylinder Reihenmotors mit gleichmäßiger Zündfolge erläutert. Fig. 2 veranschaulicht einen Kröpfungsstern einer erfindungsgemäß ausgebildeten Kurbelwelle, wobei bei 0 Grad die dem ersten Zylinder zugeordnete Kurbelkröpfung, bei 72 Grad die dem dritten Zylinder zugeordnete Kurbelkröpfung, bei 144 Grad die dem fünften Zylinder zugeordnete Kurbelkröpfung, bei 216 Grad die dem vierten Zylinder zugeordnete Kurbelkröpfung und bei 288 Grad die dem zweiten Zylinder zugeordnete Kurbelkröpfung vorgesehen ist. Bei einer gleichmäßigen Zündfolge von 720/5 = 144 Grad ergibt sich damit für die Zylinder 1 bis 5 die Zündfolge 1-4-3-2-5. Im Vergleich dazu lautet die Zündfolge einer herkömmlichen 5-Zylinder Brennkraftmaschine mit einem Kurbelstern gemäß Fig. 1: 1-2-4-5-3.

Fig. 3 und 4 veranschaulichen jeweils verbleibende Massenwirkungen (Massenmomente) für die Kurbelsterne gemäß Fig. 1 und 2, wobei von einem teilweisen Ausgleich der oszillierenden Massen auf der Kurbelwelle ausgegangen wird. Hierbei ist jeweils auf der horizontalen Achse 10 ein Kurbelwinkel in Grad und auf der vertikalen Achse 12 ein Moment in mo*r*ω²*a aufgetragen, wobei mo = oszillierende Masse [kg], r = Kurbelradius [m], ω = Kurbelwellendrehzahl [rad/s] und a = Zylinderabstand [m] ist. Die durchgezogene Linie 14 ist jeweils das Massenmoment um die x-Achse und die gestrichelte Linie 16 ist jeweils das Massenmoment um die y-Achse, wobei die x-Achse und die y-Achse senkrecht zur Kurbelwellenachse entsprechend Fig. 1 bzw. Fig. 2 verlaufen.

Eine Analyse der in den Fig. 3 und 4 dargestellten Momentenverläufe ergibt folgende Amplituden der harmonischen Anteile:

| | 1. Kurbelwellen-Ordnung | | 2. Kurbelwellen-Ordnung | |
|---|---|---|---|---|
| | Kurbelwelle gemäß | Kurbelwelle gemäß | Kurbelwelle gemäß | Kurbelwelle gemäß |
| | Fig. 1 | Fig. 2 | Fig. 1 | Fig. 2 |
| Mx/(mo*r*ω²*a) | 0,225 | 2,49 | 1,699 | 0,153 |
| My / (mo*r*ω²*a) | 0,225 | 2,49 | - | - |

Durch die erfindungsgemäß vorgeschlagene Abkehr von der herkömmlichen Zündfolge des Kurbelsterns gemäß Fig. 1 zu der Zündfolge des Kurbelsterns gemäß Fig. 2 erhöht sich die Momentenamplitude 1. Ordnung, wohingegen die Momentenamplitude 2. Ordnung derart stark fällt, daß eine Kompensation mittels Ausgleichswellen nicht mehr erforderlich ist. Es ergibt sich daher das überraschende Ergebnis, daß die Massenmomente mit einer einzigen Ausgleichswelle wirksam neutralisiert werden können, obwohl hinsichtlich der Massenmomente bzw. Massenkräfte eine Verschlechterung zu erwarten gewesen wäre.

Bei Brennkraftmaschinen mit N gleich drei oder mehr Zylindern ergeben sich rein kombinatorisch mehrere mögliche Anordnungen der Kurbelkröpfungen im Kröpfungsstern mit jeweils zugeordneten Zündfolgen bei gleichmäßigem Zündabstand. Erfindungsgemäß wird bei Dominanz der Anregung durch Massenmomente gegenüber Massenkräften vorgeschlagen aus dieser Mehrzahl von Kröpfungssternen für eine vorbestimmte Zylinderzahl N jeweils denjenigen Kröpfungsstern auszuwählen, welcher die niedrigsten Momentenamplituden 2. Ordnung aufweist. Entgegen der im Stand der Technik vorherrschenden Ansicht, läßt sich dadurch eine Vereinfachung und Verbesserung des Momentenausgleichs erzielen.

## Patentansprüche

1. Brennkraftmaschine, insbesondere für ein Kraftfahrzeug, mit N ≥ 3 Zylindern, in denen jeweils ein Kolben oszillierend vorgesehen ist, und mit einer Kurbelwelle mit N Kurbelkröpfungen, wobei jeweils eine Kurbelkröpfung mit einem Kolben in kraftübertragender Weise verbunden ist, wobei die Kurbelkröpfungen der Kurbelwelle in einer Ansicht in Richtung der Längsachse der Kurbelwelle an vorbestimmten Winkelpositionen zu einem Kurbelstern angeordnet sind, **dadurch gekennzeichnet, daß** die Kurbelkröpfungen in dem Kurbelstern derart angeordnet sind, daß die zu diesem Kurbelstern gehörende Zündfolge unter allen möglichen Zündfolgenvarianten der Zylinderzahl N die niedrigsten Momentenamplituden 2. Ordnung aufweist.

2. Brennkraftmaschine nach Anspruch 1, **dadurch gekennzeichnet, daß** der Zündabstand einen Winkel von 720/N Grad Kurbelwelle aufweist.

3. Brennkraftmaschine nach Anspruch 1 oder 2, **dadurch gekennzeichnet, daß** die N Kurbelkröpfungen im Kurbelstern gleichmäßig um einen Winkel von 360/N Grad versetzt zueinander angeordnet sind.

4. Brennkraftmaschine nach wenigstens einem der vorhergehenden Ansprüche, **dadurch gekennzeichnet, daß** N = 5 ist und der Kurbelstern bei 0 Grad die dem ersten Zylinder zugeordnete Kurbelkröpfung, bei 72 Grad die dem dritten Zylinder zugeordnete Kurbelkröpfung, bei 144 Grad die dem fünften Zylinder zugeordnete Kurbelkröpfung, bei 216 Grad die dem vierten Zylinder zugeordnete Kurbelkröpfung und bei 288 Grad die dem zweiten Zylinder zugeordnete Kurbelkröpfung aufweist, wobei die Zündfolge 1-4-3-2-5 lautet.

5. Brennkraftmaschine nach wenigstens einem der vorhergehenden Ansprüche, **dadurch gekennzeichnet, daß** die N Zylinder in Reihe angeordnet sind.
